# EUROPEAN PATENT APPLICATION

(11) **EP 3 804 962 A1**
(43) Date of publication of application: **14.04.2021**
(21) Application number: 19201688.9
(22) Date of filing: 07.10.2019
(51) Int. Cl.: B29C 64/106, B33Y 10/00

(54) **ADDITIVE MANUFACTURING METHOD**

(71) Applicant: SHPP Global Technologies B.V., 4612 PX Bergen op Zoom (NL)
(72) Inventor: MUKHOPADHYAY, Prasanta, Bangalore 562125, Kamataka (IN); SUDARSHAN, Anshita, Bangalore 562125, Kamataka (IN); BANDYOPADHYAY, Sumanda, Bangalore 562125, Kamataka (IN); SHET, Nitesh, Bangalore 562125, Kamataka (IN); MAHADEVA, Swamy Shivanappa, Bangalore 562125, Kamataka (IN)
(74) Representative: Lang, Johannes

(57) **Abstract**

A method of additively manufacturing an article includes: dispensing a thermally solidifiable material in molten form in a first predetermined pattern to form a first layer comprising a plurality of first beads parallel to each other and defined by a first bead height and a first bead width; dispensing the thermally solidifiable material in molten form onto the first layer in a second predetermined pattern to form a second layer comprising a plurality of second beads parallel to each other and in contact with and parallel to the first beads; wherein the second beads are defined by a second bead height and a second bead width; and wherein a ratio of the second bead height to the first bead height is 0.8:1 to 1.5:1, and a ratio of the second bead width to the first bead width is 1.1 to 4.1.

## Description

### BACKGROUND OF THE INVENTION

Additive manufacturing technologies such as Fused Filament Fabrication (FFF) and Large Format Additive Manufacturing (LFAM) allow the fabrication of articles with complex designs and reduced weight. Compared to articles prepared by injection molding, additively manufactured articles typically exhibit inferior mechanical properties and lower electrical resistance. There is therefore a need for additive manufacturing methods that produce articles with mechanical and electrical properties more closely resembling those of injection molded articles.

### BRIEF SUMMARY OF EMBODIMENTS OF THE INVENTION

One embodiment is a method of additively manufacturing an article, comprising: dispensing a thermally solidifiable material in molten form in a first predetermined pattern to form a first layer comprising a plurality of first beads parallel to each other and defined by a first bead height and a first bead width; and dispensing the thermally solidifiable material in molten form onto the first layer in a second predetermined pattern to form a second layer comprising a plurality of second beads parallel to each other and in contact with and parallel to the first beads; wherein the second beads are defined by a second bead height and a second bead width; and wherein a ratio of the second bead height to the first bead height is 0.8:1 to 1.5:1, and a ratio of the second bead width to the first bead width is 1.1 to 4.1.

This and other embodiments are described in detail below.

### BRIEF DESCRIPTION OF THE DRAWINGS

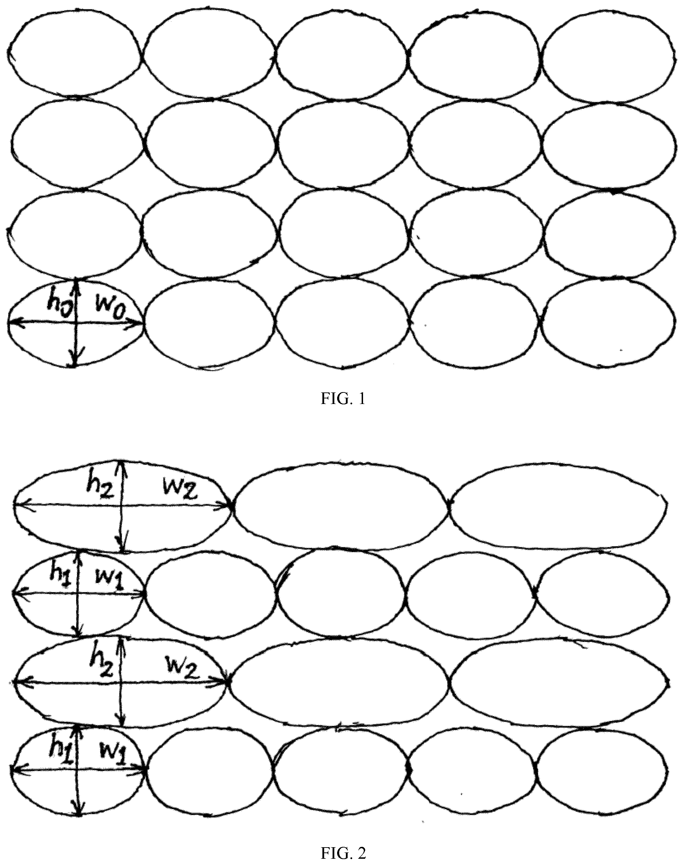

Figure 1 is a schematic, cross-sectional view of a portion of an additively manufactured article in which each layer comprises beads of nominally identical bead height (*h₀*) and bead width (*w₀*).
Figure 2 is a schematic, cross-sectional view of a portion of an additively manufactured article comprising alternating rows of two different bead dimensions; *h₁* and *w₁* are the height and width, respectively, of representative beads in the first (bottom) and third rows; and *h₂* and *w₂* are the height and width, respectively, of representative beads in the second and fourth rows.

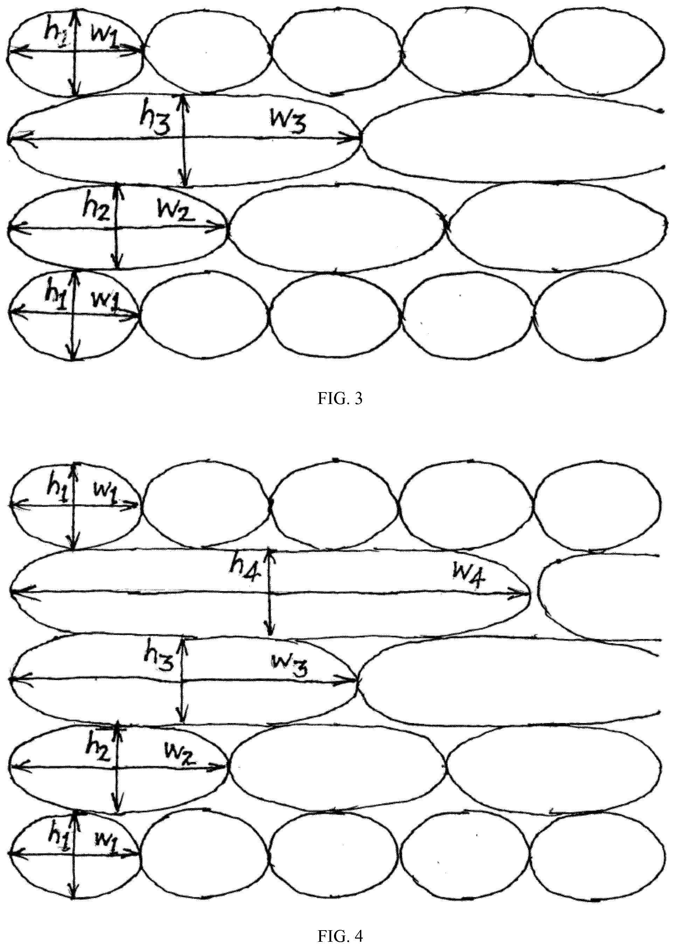

Figure 3 is a schematic, cross-sectional view of a portion of an additively manufactured article comprising alternating rows of three different bead dimensions; *h₁* and *w₁* are the height and width, respectively, of representative beads in the first (bottom) and fourth (top) rows; *h₂* and *w₂* are the height and width, respectively, of a representative bead in the second row; and *h₃* and *w₃* are the height and width, respectively, of a representative bead in the third row.
Figure 4 is a schematic, cross-sectional view of a portion of an additively manufactured article comprising alternating rows of four different bead dimensions; *h₁* and *w₁* are the height and width, respectively, of representative beads in the first (bottom) and fifth (top) rows; *h₂* and *w₂* are the height and width, respectively, of a representative bead in the second row; *h₃* and *w₃* are the height and width, respectively, of a representative bead in the third row; and *h₄* and *w₄* are the height and width, respectively, of a representative bead in the fourth row.

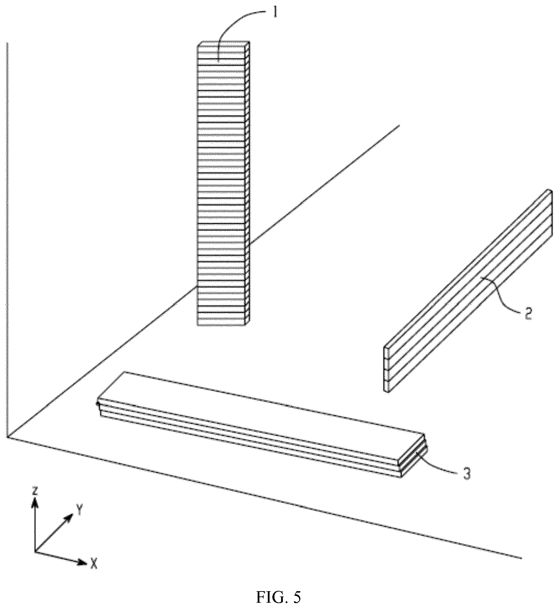

Figure 5 is a diagram of print (layer) orientations for exemplary test articles useful for determining tensile properties.

### DETAILED DESCRIPTION OF THE INVENTION

The present inventors have determined that an article exhibiting improved mechanical and electrical properties is obtained when the article is fabricated by a specific additive manufacturing method utilizing variable bead widths. In particular, the additive manufacturing method includes dispensing a thermally solidifiable material in molten form in a first predetermined pattern to form a first layer comprising a plurality of first beads parallel to each other and defined by a first bead height and a first bead width; and dispensing the thermally solidifiable material in molten form onto the first layer in a second predetermined pattern to form a second layer comprising a plurality of second beads parallel to each other and in contact with and parallel to the first beads; wherein the second beads are defined by a second bead height and a second bead width; and wherein a ratio of the second bead height to the first bead height is 0.8:1 to 1.5:1, and a ratio of the second bead width to the first bead width is 1.1 to 4.1.

Bead heights and widths can be determined from a cross-section of the article. Specifically, a multi-layer article formed by the method can be cross-sectioned at an angle perpendicular to the length of the beads. The cross-section can then analyzed (for example by optical microscopy) to determine the heights and widths of cross-sectioned beads. For a given layer having beads of nominally identical dimensions, height and width can be determined for six adjacent beads, and the results can be used to calculate an average bead height and an average bead width for that layer. The process is then repeated for other layers having different bead dimensions.

For comparison, Figure 1 is a schematic, cross-sectional view of a portion of an additively manufactured article in which each layer comprises beads of nominally identical bead height and bead width.

In the present method, the ratio of the second bead height to the first bead height is 0.8:1 to 1.5:1, and the ratio of the second bead width to the first bead width is 1.1 to 4.1. Within the range of 0.8:1 to 1.5:1, the ratio of the second bead height to the first bead height can be 0.8:1 to 1.4:1, or 0.9:1 to 1.2:1. Within the range of 1.1 to 4.1, the ratio of the second bead width to the first bead width can be 1.2:1 to 3:1, or 1.3:1 to 2:1.

In some embodiments, the method comprises forming at least three layers comprising at least two bead widths. Specifically, in these embodiments, the method further comprises dispensing the thermally solidifiable material in molten form onto the second layer in a third predetermined pattern to form a third layer comprising a plurality of third beads parallel to each other and in contact with and parallel to the second beads; wherein the third beads are defined by a third bead height a third bead width; and wherein a ratio of the third bead height to the first bead height is 0.9:1 to 1.1:1, and a ratio of the third bead width to the first bead width is 0.9:1 to 1.1:1. Within the range of 0.9:1 to 1.1:1 the ratio of the third bead height to the first bead height can be 0.95:1 to 1.05:1. Within the range of 0.9:1 to 1.1:1 the ratio of the third bead width to the first bead width can be 0.95:1 to 1.05:1.

In some embodiments, the method comprises forming at least four layers comprising at least two bead widths. Specifically, in these embodiments, the method of the previous paragraph further comprises dispensing the thermally solidifiable material in molten form onto the third layer in a fourth predetermined pattern to form a fourth layer comprising a plurality of fourth beads parallel to each other and in contact with and parallel to the third beads; wherein the fourth beads are defined by a fourth bead height and a fourth bead width; and wherein a ratio of the fourth bead height to the second bead height is 0.9:1 to 1.1:1, and a ratio of the fourth bead width to the second bead width is 0.9:1 to 1.1:1. Within the range of 0.9:1 to 1.1:1 the ratio of the fourth bead height to the second bead height can be 0.95:1 to 1.05:1. Within the range of 0.9:1 to 1.1:1 the ratio of the fourth bead width to the second bead width can be 0.95:1 to 1.05:1. Figure 2 is a schematic, cross-sectional view of a portion of an additively manufactured article comprising alternating rows of two different bead dimensions; h₁ and w₁ are the height and width, respectively, of representative beads in the first (bottom) and third rows; and h₂ and w₂ are the height and width, respectively, of representative beads in the second and fourth rows.

In some embodiment, the method utilizes at least three bead widths. Specifically, in these embodiments, the method further comprises dispensing the thermally solidifiable material in molten form onto the second layer in a third predetermined pattern to form a third layer comprising a plurality of third beads parallel to each other and in contact with and parallel to the second beads; wherein the third beads are defined by a third bead height and a third bead width; and wherein a ratio of the third bead height to the second bead height is 0.8:1 to 1.5:1, and a ratio of the third bead width to the second bead width is 1.1 to 4.1. Within the range of 0.8:1 to 1.5:1, the ratio of the third bead height to the second bead height can be 0.8:1 to 1.4:1, or 0.9:1 to 1.2:1. Within the range of 1.1 to 4.1, the ratio of the third bead width to the second bead width can be 1.2:1 to 3:1, or 1.3:1 to 2:1.

In some embodiments, the method comprises forming at least four layers comprising at least three bead widths. Specifically, in these embodiments, the method of the previous paragraph further comprises dispensing the thermally solidifiable material in molten form onto the third layer in a fourth predetermined pattern to form a fourth layer comprising a plurality of fourth beads parallel to each other and in contact with and parallel to the third beads; wherein the fourth beads are defined by a fourth bead height and a fourth bead width; and wherein a ratio of the fourth bead height to the first bead height is 0.9:1 to 1.1:1, and a ratio of the fourth bead width to the first bead width is 0.9:1 to 1.1:1. Within the range of 0.9:1 to 1.1:1, the ratio of the fourth bead height to the first bead height can be 0.95:1 to 1.05:1. Within the range of 0.9:1 to 1.1:1, the ratio of the fourth bead width to the first bead width can be 0.95:1 to 1.05:1. Figure 3 is a schematic, cross-sectional view of a portion of an additively manufactured article comprising alternating rows of three different bead dimensions; h₁ and w₁ are the height and width, respectively, of representative beads in the first (bottom) and fourth (top) rows; h₂ and w₂ are the height and width, respectively, of a representative bead in the second row; and h₃ and w₃ are the height and width, respectively, of a representative bead in the third row.

In some embodiments, the method utilizes at least four bead widths. Specifically, in these embodiments, the method utilizing at least three bead widths further comprises dispensing the thermally solidifiable material in molten form onto the third layer in a fourth predetermined pattern to form a fourth layer comprising a plurality of fourth beads parallel to each other and in contact with and parallel to the third beads; wherein the fourth beads are defined by a fourth bead height and a fourth bead width; and wherein a ratio of the fourth bead height to the third bead height is 0.8:1 to 1.5:1, and a ratio of the fourth bead width to the third bead width is 1.1 to 4.1. Within the range of 0.8:1 to 1.5:1, the ratio of the fourth bead height to the third bead height can be 0.8:1 to 1.4:1, or 0.9:1 to 1.2:1. Within the range of 1.1 to 4.1, the ratio of the fourth bead width to the third bead width is 1.2:1 to 3:1, or 1.3:1 to 2:1.

In some embodiments, the method comprises forming at least five layers comprising at least four bead widths. Specifically, in these embodiments, the method of the previous paragraph further comprises dispensing the thermally solidifiable material in molten form onto the fourth layer in a fifth predetermined pattern to form a fifth layer comprising a plurality of fifth beads parallel to each other and in contact with and parallel to the fourth beads; wherein the fifth beads are defined by a fifth bead height and a fifth bead width; and wherein a ratio of the fifth bead height to the first bead height is 0.9:1 to 1.1:1, and a ratio of the fifth bead width to the first bead width is 0.9:1 to 1.1:1. Within the range of 0.9:1 to 1.1:1, the ratio of the fifth bead height to the first bead height can be 0.95:1 to 1.05:1. Within the range of 0.9:1 to 1.1:1, the ratio of the fifth bead width to the first bead width can be 0.95:1 to 1.05:1. Figure 4 is a schematic, cross-sectional view of a portion of an additively manufactured article comprising alternating rows of four different bead dimensions; h₁ and w₁ are the height and width, respectively, of representative beads in the first (bottom) and fifth (top) rows; h₂ and w₂ are the height and width, respectively, of a representative bead in the second row; h₃ and w₃ are the height and width, respectively, of a representative bead in the third row; and h₄ and w₄ are the height and width, respectively, of a representative bead in the fourth row.

In some embodiments of the method, the ratio of bead widths in adjacent layers approximates (e.g., is within 2 percent of, or within 1 percent of) a ratio of prime numbers. For example, if an article comprises first, second, and third layers having first, second, and third bead widths, respectively, then the ratio of the second bead width to the first bead width can approximate a ratio of prime numbers, and the ratio of the third bead width to the second bead width can approximate a ratio of prime numbers. These embodiments have the advantage of minimizing the overlap between a lengthwise bead-to-bead interface in one layer and a lengthwise bead-to-bead interface in an adjacent layer. An example of such an embodiment would be an article comprising repeating series of first, second, and third layers having first, second, and third bead widths, respectively, wherein the ratio of the second bead width to the first bead width is within 2 percent of 5/3 = 1 2/3, the ratio of the third bead width to the second bead width is within 2 percent of 7/5 = 1.4, and the ratio of the third bead width to the first bead width is within 2 percent of 7/3 = 2 1/3.

In some embodiments, the first bead height is 0.05 to 10 millimeters, and the first bead width is 0.1 to 20 millimeters. In other embodiments, including some embodiments in which the method utilizes fused filament fabrication, the first bead height is 0.05 to 2 millimeters, and the first bead width is 0.1 to 5 millimeters or 0.1 to 1.2 millimeters. Within the range of 0.05 to 2 millimeters, the first bead height can be 0.05 to 1.2 millimeters, or 0.1 to 1 millimeter, or 0.1 to 0.4 millimeter. Within the range of 0.1 to 5 millimeters, the first bead width can be 0.1 to 2.5 millimeters, or 0.1 to 2 millimeters, or 0.1 to 1.2 millimeters, or 0.1 to 1 millimeter, or 0.2 to 2 millimeters, or 0.2 to 1.2 millimeters. In other embodiments, including some embodiments in which the method utilizes large format additive manufacturing, the first bead height is 1 to 10 millimeters, and the first bead width is 2 to 20 millimeters. Within the range of 1 to 10 millimeters, the first bead height can be 2 to 8 millimeters, or 2.5 to 5 millimeters. Within the range of 2 to 20 millimeters, the first bead width can be 2.5 to 20 millimeters, or 2.5 to 16 millimeters, or 4 to 16 millimeters, or 5 to 13 millimeters.

In some embodiments of the method, bead width is at least partially controlled by extrusion orifice size. For example, in some embodiments, the dispensing the thermally solidifiable material to form the first layer comprises extruding the thermally solidifiable material through a first orifice defined by a first cross-sectional area, the dispensing the thermally solidifiable material to form a second layer comprises extruding the thermally solidifiable material through a second orifice defined by a second cross-sectional area, and a ratio of the second cross-sectional area to the first cross-sectional area is 1.1 to 4.1. Within the range of 1.1 to 4.1, the ratio of the second cross-sectional area to the first cross-sectional area can be 1.2:1 to 3:1, or 1.3:1 to 2:1.

In some embodiments of the method, bead width is at least partially controlled by linear extrusion rate. For example, in some embodiments, the dispensing the thermally solidifiable material to form the first layer comprises extruding the thermally solidifiable material at a first extrusion rate having units of micrograms thermally solidifiable material per millimeter of bead, the dispensing the thermally solidifiable material to form a second layer comprises extruding the thermally solidifiable material at a second extrusion rate having units of micrograms thermally solidifiable material per millimeter of bead, and a ratio of the second extrusion rate to the first extrusion rate is 1.1 to 4.1. Within the range of 1.1 to 4.1, the ratio of the second extrusion rate to the first extrusion rate can be 1.2:1 to 3:1, or 1.3:1 to 2:1.

In some embodiments of the method, bead width is at least partially controlled by the melt temperature of the extrudate. For example, in some embodiments, the dispensing the thermally solidifiable material to form the first layer comprises extruding the thermally solidifiable material at a first temperature, the dispensing the thermally solidifiable material to form a second layer comprises extruding the thermally solidifiable material at a second temperature 2 to 20 °C greater than the first temperature. The second temperature can be 2 to 10 °C greater than the first temperature, or 3 to 8 °C greater than the first temperature.

The method is applicable to a wide variety of thermally solidifiable materials. In some embodiments, the thermally solidifiable material comprises a thermoplastic selected from the group consisting of acrylonitrile-butadiene-styrene copolymers, polyacetals, polyacrylates, polymethacrylates, polyamides, polycarbonates, polycarbonate-polysiloxanes, polyesters, polyestercarbonates, polyestercarbonate-polysiloxanes, poly(ether ketone)s, poly(ether ketone ketone)s, polyetherimides, polyethylenes, polypropylenes, poly(phenylene ether)s, polylactic acids, polystyrenes, polysulfones, poly(vinyl chloride)s, and combinations thereof. In other embodiments, the thermally solidifiable material comprises a thermoplastic is selected from the group consisting of acrylonitrile-butadiene-styrene copolymers, polycarbonates, polyestercarbonates, polyestercarbonate-polysiloxanes, polyetherimides, polyethylenes, polypropylenes, poly(phenylene ether)s, and combinations thereof.

The invention includes at least the following aspects.
Aspect 1: A method of additively manufacturing an article, comprising: dispensing a thermally solidifiable material in molten form in a first predetermined pattern to form a first layer comprising a plurality of first beads parallel to each other and defined by a first bead height and a first bead width; and dispensing the thermally solidifiable material in molten form onto the first layer in a second predetermined pattern to form a second layer comprising a plurality of second beads parallel to each other and in contact with and parallel to the first beads; wherein the second beads are defined by a second bead height and a second bead width; and wherein a ratio of the second bead height to the first bead height is 0.8:1 to 1.5:1, and a ratio of the second bead width to the first bead width is 1.1 to 4.1.
Aspect 2: The method of aspect 1, further comprising dispensing the thermally solidifiable material in molten form onto the second layer in a third predetermined pattern to form a third layer comprising a plurality of third beads parallel to each other and in contact with and parallel to the second beads; wherein the third beads are defined by a third bead height a third bead width; and wherein a ratio of the third bead height to the first bead height is 0.9:1 to 1.1:1, and a ratio of the third bead width to the first bead width is 0.9:1 to 1.1:1.
Aspect 3: The method of aspect 1, further comprising dispensing the thermally solidifiable material in molten form onto the second layer in a third predetermined pattern to form a third layer comprising a plurality of third beads parallel to each other and in contact with and parallel to the second beads; wherein the third beads are defined by a third bead height and a third bead width; and wherein a ratio of the third bead height to the second bead height is 0.8:1 to 1.5:1, and a ratio of the third bead width to the second bead width is 1.1 to 4.1.
Aspect 4: The method of aspect 3, further comprising dispensing the thermally solidifiable material in molten form onto the third layer in a fourth predetermined pattern to form a fourth layer comprising a plurality of fourth beads parallel to each other and in contact with and parallel to the third beads; wherein the fourth beads are defined by a fourth bead height and a fourth bead width; and wherein a ratio of the fourth bead height to the first bead height is 0.9:1 to 1.1:1, and a ratio of the fourth bead width to the first bead width is 0.9:1 to 1.1:1.
Aspect 5: The method of aspect 3, further comprising dispensing the thermally solidifiable material in molten form onto the third layer in a fourth predetermined pattern to form a fourth layer comprising a plurality of fourth beads parallel to each other and in contact with and parallel to the third beads; wherein the fourth beads are defined by a fourth bead height and a fourth bead width; and wherein a ratio of the fourth bead height to the third bead height is 0.8:1 to 1.5:1, and a ratio of the fourth bead width to the third bead width is 1.1 to 4.1.
Aspect 6: The method of any one of aspects 1-5, wherein the ratio of the second bead width to the first bead width is within 2 percent of a ratio of prime numbers.
Aspect 7: The method of any one of aspects 1-6, wherein the dispensing the thermally solidifiable material to form the first layer comprises extruding the thermally solidifiable material through a first orifice defined by a first cross-sectional area, the dispensing the thermally solidifiable material to form a second layer comprises extruding the thermally solidifiable material through a second orifice defined by a second cross-sectional area, and a ratio of the second cross-sectional area to the first cross-sectional area is 1.1 to 4.1.
Aspect 8: The method of any one of aspects 1-7, wherein the dispensing the thermally solidifiable material to form the first layer comprises extruding the thermally solidifiable material at a first extrusion rate having units of micrograms thermally solidifiable material per millimeter of bead, the dispensing the thermally solidifiable material to form a second layer comprises extruding the thermally solidifiable material at a second extrusion rate having units of micrograms thermally solidifiable material per millimeter of bead, and a ratio of the second extrusion rate to the first extrusion rate is 1.1 to 4.1.
Aspect 9: The method of any one of aspects 1-8, wherein the dispensing the thermally solidifiable material to form the first layer comprises extruding the thermally solidifiable material at a first temperature, the dispensing the thermally solidifiable material to form a second layer comprises extruding the thermally solidifiable material at a second temperature 2 to 20 °C greater than the first temperature.
Aspect 10: The method of any one of aspects 1-9, wherein the thermally solidifiable material comprises a thermoplastic selected from the group consisting of acrylonitrile-butadiene-styrene copolymers, polyacetals, polyacrylates, polymethacrylates, polyamides, polycarbonates, polycarbonate-polysiloxanes, polyesters, polyestercarbonates, polyestercarbonate-polysiloxanes, poly(ether ketone)s, poly(ether ketone ketone)s, polyetherimides, polyethylenes, polypropylenes, poly(phenylene ether)s, polylactic acids, polystyrenes, polysulfones, poly(vinyl chloride)s, and combinations thereof.
Aspect 11: The method of any one of aspects 1-9, wherein the thermally solidifiable material comprises a thermoplastic is selected from the group consisting of acrylonitrile-butadiene-styrene copolymers, polycarbonates, polyestercarbonates, polyestercarbonate-polysiloxanes, polyetherimides, polyethylenes, polypropylenes, poly(phenylene ether)s, and combinations thereof.

All ranges disclosed herein are inclusive of the endpoints, and the endpoints are independently combinable with each other. Each range disclosed herein constitutes a disclosure of any point or sub-range lying within the disclosed range.

The invention is further illustrated by the following non-limiting examples.

### EXAMPLES

In the experiments described below, injection molding utilized a polycarbonate-based resin obtained as LEXAN™ HF1110 resin from SABIC, and additive manufacturing utilized a polycarbonate-based filament obtained as LEXAN™ FILAMENT AM1110F from SABIC. The LEXAN™ HF1110 resin and the LEXAN™ FILAMENT AM1110F had the same composition.

For Comparative Example 1, two types of articles were prepared by injection molding. The first type of article was a square plaque having dimensions of 60 millimeters by 60 millimeters by 1.5 millimeters. The second type of article was a tensile test article for a Type V specimen having a length of 63.5 millimeters, a width of 13 millimeters, and a thickness of 3.2 millimeters. Before use for injection molding, pellets were conditioned at 23 °C and 50 percent relative humidity for at least 40 hours. Injection molding was conducted on a 130 ton Sumitomo injection molding machine operating with barrel temperatures of 280 to 290 °C and a mold temperature of 90 °C.

For Comparative Example 2, the two types of articles described for Comparative Example 1 were printed by fused filament fabrication using the bead pattern schematically illustrated in Figure 1, in which all beads have the same nominal bead height (*h₀*) and bead width (*w₀*), and the beads of each layer are positioned directly above the beads of the layer beneath it. Printing was conducted on a fused filament fabrication printer that allowed for specification of bead height and bead width. Prior to printing, the filament was conditioned at 75 °C for 4 to 6 hours. Figure 5 is a diagram of print (layer) orientations for exemplary test articles useful for determining tensile properties. The orientations are named relative to the Z-direction: the orientation labeled 1 has an XZ or "upright" orientation; the orientation labeled 2 has a YZ or "on-edge" orientation and; and the orientation labeled 3 has an XY or "flat" orientation. For these experiments, tensile test articles were printed in the flat orientation. Plaques were printed in the XY or "flat" orientation, with the thickness of the plaque corresponding to the printing Z-direction. Tensile test articles were printed in the XY or "flat" orientation, with the thickness of the test article corresponding to the printing Z-direction. Printing conditions included a material setting consistent with the LEXAN™ AM1110F filament; an extrusion tip having an orifice with a diameter of 0.4 millimeters; no air gap between rasters; solid infill; and, in all layers, a bead height of 250 micrometers and a bead width of 400 micrometers. Nozzle temperature and cabinet temperature were controlled via the material setting.

For Example 1, an article was printed as for Comparative Example 2, except that the bead pattern schematically illustrated in Figure 2 was used. This bead pattern features alternating layers of narrower beads (having a bead height setting of 250 micrometers and a bead width setting of 400 micrometers) and wider beads (having a bead height setting of 250 micrometers and a bead width setting of 700 micrometers). Printing of wider beads was accomplished by altering the Z-direction print head travel such that print head movement defined a sine curve in the XZ plane. Alternatively, bead width could have been altered by increasing the orifice size, decreasing the speed of print head travel in the X direction, or increasing the material feed rate and the orifice temperature.

For Example 2, an article was printed as for Example 1, except that the bead pattern schematically illustrated in Figure 4 was used. This bead pattern features repeating groups of four layers with different bead widths. For all layers, the bead height was set to 250 micrometers. For first layers (with narrowest beads), the bead width was set to 500 micrometers; for second layers, the bead width was set to 600 micrometers; for third layers, the bead width was set to 700 micrometers; and for fourth layers (with widest beads), the bead width was set to 800 micrometers.

Table 2 summarizes average bead dimensions in the articles for Comparative Example 2, Example 1, and Example 2. A microtome was used to prepare cross sections of articles at a 90 degree angle relative to the bead lengths. The cross sections were analyzed by optical microscopy using a Keyence optical microscope. For a given layer having beads of nominally identical dimensions, height and width were determined for six adjacent beads, and the results were used to calculate an average bead height and an average bead width for that layer, with height and width values being expressed in units of micrometers. The process was then repeated for other layers having different bead dimensions. Ratios of bead dimensions were calculated from average values. The results are presented in Table 2.

**Table 2**

| | C. Ex. 2 | Ex. 1 | Ex. 2 |
|---|---|---|---|
| *h₀* (µm) | 222 | -- | -- |
| *w₀* (µm) | 410 | -- | -- |
| *h₁* (µm) | -- | 224 | 225 |
| *w₁* (µm) | -- | 405 | 503 |
| *h₂* (µm) | -- | 223 | 222 |
| *w₂* (µm) | -- | 704 | 603 |
| *h₃* (µm) | -- | -- | 227 |
| *w₃* (µm) | -- | -- | 702 |
| *h₄* (µm) | -- | -- | 222 |
| *w₄* (µm) | -- | -- | 801 |
| *h₂*/*h₁* | -- | 0.995 | 0.987 |
| *w₂*/*w₁* | -- | 1.74 | 1.20 |
| *h₃*/*h₂* | -- | -- | 1.02 |
| *w₃*/*w₂* | -- | -- | 1.16 |
| *h₄*/*h₃* | -- | -- | 0.978 |
| *w₄*/*w₃* | -- | -- | 1.14 |

Table 3 summarizes dielectric strength values (expressed in units of kilovolts per millimeter) and tensile strength at yield values (expressed in units of megapascals) for articles corresponding to Comparative Examples 1 and 2, and Examples 1 and 2. Dielectric strength values were determined according to ASTM D149-09(2013) at 23 °C. Dielectric strength averages and standard deviations in Table 3 are based on testing of five samples per condition. Tensile strength at yield values were determined according to ASTM D638-14 at a speed of 5 millimeters/minute. Tensile strength at yield averages and standard deviations in Table 3 are based on testing of five samples per condition. A difference between two average values was deemed statistically significant if a t test indicated that there was a less than 5 percent chance that the two values were equal. For dielectric strength, the results show a statistically significant difference in average dielectric strengths for Example 1 relative to Comparative Example 2, with the average dielectric strength being greater for Example 1. For Example 2 versus Comparative Example 2, the average dielectric strength was greater for Example 2, but the difference was not quite statistically significant. For tensile strength at yield, the results showed no statistically significant differences between values for Examples 1 and 2 and the value for Comparative Example 2.

**Table 3**

| | C. Ex. 1 | C. Ex. 2 | Ex. 1 | Ex. 2 |
|---|---|---|---|---|
| Dielectric Strength (kV/mm) | 23.2 ± 0.4 | 18.1 ± 5.4 | 22.3 ± 1.1 | 21.7 ± 3.3 |
| Tensile Strength at Yield (MPa) | 60.8 ± 1.1 | 53.2 ± 0.5 | 52.0 ± 0.8 | 54.1 ± 0.5 |

## Claims

1. A method of additively manufacturing an article, comprising:
dispensing a thermally solidifiable material in molten form in a first predetermined pattern to form a first layer comprising a plurality of first beads parallel to each other and defined by a first bead height and a first bead width; and
dispensing the thermally solidifiable material in molten form onto the first layer in a second predetermined pattern to form a second layer comprising a plurality of second beads parallel to each other and in contact with and parallel to the first beads; wherein the second beads are defined by a second bead height and a second bead width; and wherein a ratio of the second bead height to the first bead height is 0.8:1 to 1.5:1, and a ratio of the second bead width to the first bead width is 1.1 to 4.1.

2. The method of claim 1, further comprising dispensing the thermally solidifiable material in molten form onto the second layer in a third predetermined pattern to form a third layer comprising a plurality of third beads parallel to each other and in contact with and parallel to the second beads; wherein the third beads are defined by a third bead height a third bead width; and wherein a ratio of the third bead height to the first bead height is 0.9:1 to 1.1:1, and a ratio of the third bead width to the first bead width is 0.9:1 to 1.1:1.

3. The method of claim 1, further comprising dispensing the thermally solidifiable material in molten form onto the second layer in a third predetermined pattern to form a third layer comprising a plurality of third beads parallel to each other and in contact with and parallel to the second beads; wherein the third beads are defined by a third bead height and a third bead width; and wherein a ratio of the third bead height to the second bead height is 0.8:1 to 1.5:1, and a ratio of the third bead width to the second bead width is 1.1 to 4.1.

4. The method of claim 3, further comprising dispensing the thermally solidifiable material in molten form onto the third layer in a fourth predetermined pattern to form a fourth layer comprising a plurality of fourth beads parallel to each other and in contact with and parallel to the third beads; wherein the fourth beads are defined by a fourth bead height and a fourth bead width; and wherein a ratio of the fourth bead height to the first bead height is 0.9:1 to 1.1:1, and a ratio of the fourth bead width to the first bead width is 0.9:1 to 1.1:1.

5. The method of claim 3, further comprising dispensing the thermally solidifiable material in molten form onto the third layer in a fourth predetermined pattern to form a fourth layer comprising a plurality of fourth beads parallel to each other and in contact with and parallel to the third beads; wherein the fourth beads are defined by a fourth bead height and a fourth bead width; and wherein a ratio of the fourth bead height to the third bead height is 0.8:1 to 1.5:1, and a ratio of the fourth bead width to the third bead width is 1.1 to 4.1.

6. The method of any one of claims 1-5, wherein the ratio of the second bead width to the first bead width is within 2 percent of a ratio of prime numbers.

7. The method of any one of claims 1-6, wherein
the dispensing the thermally solidifiable material to form the first layer comprises extruding the thermally solidifiable material through a first orifice defined by a first cross-sectional area,
the dispensing the thermally solidifiable material to form a second layer comprises extruding the thermally solidifiable material through a second orifice defined by a second cross-sectional area, and
a ratio of the second cross-sectional area to the first cross-sectional area is 1.1 to 4.1.

8. The method of any one of claims 1-7, wherein
the dispensing the thermally solidifiable material to form the first layer comprises extruding the thermally solidifiable material at a first extrusion rate having units of micrograms thermally solidifiable material per millimeter of bead,
the dispensing the thermally solidifiable material to form a second layer comprises extruding the thermally solidifiable material at a second extrusion rate having units of micrograms thermally solidifiable material per millimeter of bead, and
a ratio of the second extrusion rate to the first extrusion rate is 1.1 to 4.1.

9. The method of any one of claims 1-8, wherein
the dispensing the thermally solidifiable material to form the first layer comprises extruding the thermally solidifiable material at a first temperature,
the dispensing the thermally solidifiable material to form a second layer comprises extruding the thermally solidifiable material at a second temperature 2 to 20 °C greater than the first temperature.

10. The method of any one of claims 1-9, wherein the thermally solidifiable material comprises a thermoplastic selected from the group consisting of acrylonitrile-butadiene-styrene copolymers, polyacetals, polyacrylates, polymethacrylates, polyamides, polycarbonates, polycarbonate-polysiloxanes, polyesters, polyestercarbonates, polyestercarbonate-polysiloxanes, poly(ether ketone)s, poly(ether ketone ketone)s, polyetherimides, polyethylenes, polypropylenes, poly(phenylene ether)s, polylactic acids, polystyrenes, polysulfones, poly(vinyl chloride)s, and combinations thereof.

11. The method of any one of claims 1-9, wherein the thermally solidifiable material comprises a thermoplastic is selected from the group consisting of acrylonitrile-butadiene-styrene copolymers, polycarbonates, polyestercarbonates, polyestercarbonate-polysiloxanes, polyetherimides, polyethylenes, polypropylenes, poly(phenylene ether)s, and combinations thereof.
